Europäisches Patentamt

European Patent Office

Office européen des brevets

(19)

(11) Veröffentlichungsnummer: **0 007 449**

**A1**

(12) # EUROPÄISCHE PATENTANMELDUNG

(21) Anmeldenummer: 79102141.3

(22) Anmeldetag: 27.06.79

(51) Int. Cl.³: **G 11 B 5/55**
**G 01 P 3/54**

(30) Priorität: 31.07.78 DE 2833591

(43) Veröffentlichungstag der Anmeldung:
06.02.80 Patentblatt 80/3

(84) Benannte Vertragsstaaten:
AT BE CH FR IT NL

(71) Anmelder: SIEMENS AKTIENGESELLSCHAFT Berlin
und München
Postfach 261
D-8000 München 22(DE)

(72) Erfinder: Wentzel, Peter, Dipl.-Ing.
Eupenstrasse 12
D-8900 Augsburg(DE)

(72) Erfinder: Eiting, Hermann
Kerschensteinerstrasse 258
D-8034 Unterpfaffenhofen(DE)

(54) Verfahren zum Erzeugen von digitalen Ist-Geschwindigkeitssignalen in einem Positioniersystem für die
Schreib-/Leseköpfe eines Magnetplattenspeichers.

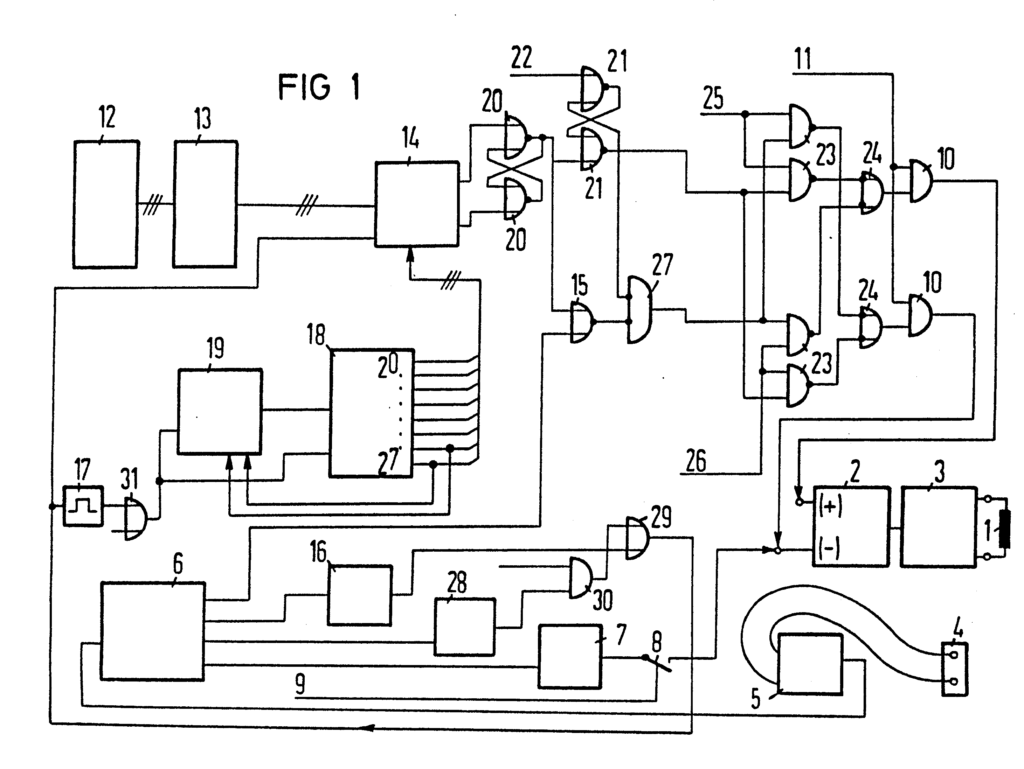

(57) Verfahren zum Erzeugen von digitalen Ist-Geschwindigkeitssignalen in einem Positioniersystem für die Schrieb-
/Leseköpfe eines Magnetplattenspeichers. Aus dem Positionssignal werden digitale Signale abgeleitet, deren Flanken
die Datenspurmitten (Zylindermitten) markieren, aus diesen
Signalen werden Rücksetzsignale für einen durch Taktimpulse hochgezählten Digitalzähler gebildet und beim Erkennen eines Nulldurchganges des Positionssignales wird der
Inhalt des Zählers abgefragt und der Zähler zurückgesetzt.
Anwendung bei Plattenspeicher für Dv-Systeme. (Fig. 1)

FIG 1

EP 0 007 449 A1

SIEMENS AKTIENGESELLSCHAFT                Unser Zeichen

Berlin und München                        VPA 78 P 2 0 4 3 EUR

Verfahren zum Erzeugen von digitalen Ist-Geschwindigkeitssignalen in einem Positioniersystem für die Schreib-/Le-
seköpfe eines Magnetplattenspeichers

Die Erfindung bezieht sich auf ein Verfahren zum Erzeugen von digitalen Ist-Geschwindigkeitssignalen in einem
Positioniersystem für die Schreib-/Leseköpfe eines Magnetplattenspeichers, bei dem aus Servoinformationen ein
sogenanntes Positionssignal für die Feinregelung gewonnen wird.

Positioniersysteme für Plattenspeicher besitzen als Positionierantrieb meist elektrische Liniarmotoren. Sie arbeiten heute praktisch ausnahmslos mit einer zeitoptimalen Regelung des Spurzugriffs. Das bedeutet, daß der Positionierer zuerst mit der vollen zur Verfügung stehenden Kraft beschleunigt und dann wieder verzögert wird.

In einem zeitoptimal geregelten Positioniersystem hat
die Geschwindigkeit nach einer Wurzelfunktion aus der
Zielentfernung zu verlaufen. Dies wird in bekannten Po-

Kar 1 Sur / 28.7.1978

sitionsregelungen wie folgt gelöst: Es wird der Inhalt des Spurdifferenzregisters, dessen aktueller Stand die Entfernung zur Zielspur repräsentiert, in ein analoges Wegsignal umgewandelt und geglättet. Die Glättung der Wegkurve wird erreicht, indem das Geschwindigkeitssignal zwischen zwei benachbarten Zylinderimpulsen aufintegriert wird und die so entstehenden kleinen Wegdreiecke von der gestuften Wegkurve am D/A-Wandlerausgang abgezogen werden. Die geglättete Wegkurve wird von einem Wurzelfunktionsgenerator zur Sollgeschwindigkeitskurve verzerrt und dann am Eingang eines Summierverstärkers mit dem von einem induktiven oder elektronischen Geschwindigkeitsgeber gelieferten analogen Ist-Geschwindigkeitssignal verglichen. Der Summierverstärker verstärkt die Differenz zwischen Soll- und Istgeschwindigkeitssignal und steuert damit den Leistungsverstärker für den Tauchspulenstrom. Beim Leistungsverstärker handelt es sich im allgemeinen um einen Linearverstärker, d.h. zwischen Regelabweichung und Tauchspulenstrom herrscht im nicht strombegrenzten Gebiet Proportionalität.

Es sind aber auch Lösungen mit Schaltverstärkern bekannt geworden. In diesen Fällen wird der Verzögerungsstrom getaktet (Zweipunktregelung), wobei die Frequenz der Bremspulse zur Vermeidung von Unruhe im System einige Kilohertz beträgt. Die Änderung der Stellgröße wird erreicht durch Breitenmodulation (Phasenmodulation) der Bremspulse. Die Basis dafür bildet ein Analogvergleich der Regelabweichung mit einer Sägezahnspannung. Der Vorteil dieses Verfahrens liegt vor allem im einfacheren Aufbau des Leistungsverstärkers. Aufwendiger erscheint das Verfahren der Phasenmodulation, so daß man insgesamt die nichtlineare und die lineare Geschwindigkeitsregelung des Positionierers als gleichwertig betrachten kann.

Die großen Nachteile beider Systeme sind der induktive bzw. elektronische Geschwindigkeitsgeber (US-Patent 3 820 712) und die umfangreichen Analogkomplexe. Der induktive Geschwindigkeitsgeber neigt zu Resonanzen und ist bei geringen Geschwindigkeiten aufgrund von Einkopplungen des Tauchspulenstromes in die Geberspule ungenau. Der elektronische Geschwindigkeitsgeber erfordert hohen Schaltungsaufwand und muß außerdem an die jeweiligen Geräteparameter angepasst werden, da er nur eine indirekte Geschwindigkeitsmessung durchführt. Die Analogteile in der Regelelektronik sind teuer, schwierig zu prüfen und erfordern umfangreiche Zusatzschaltungen für die Diagnose.

Zur Verringerung des Analogteiles in der Regelelektronik ist bereits eine Einrichtung vorgeschlagen worden, bei der die optimale Bremskurve für den Positionierer in digitaler Form gespeichert und in einem Vergleicher mit einer der Istgeschwindigkeit des Positionierers proportionalen Größe verglichen und daraus ein digitales Steuersignal für den Positionierer abgeleitet wird. Mit Einrichtungen dieser Art läßt sich zwar der Analogteil der Regelelektronik wesentlich verringern; die Schwierigkeiten der in der Regel bei Positionierern für Magnetplattenspeicher verwendeten analogen Geschwindigkeitsgeber bleiben dadurch auch weiterhin bestehen.

Der vorliegenden Erfindung lag daher die Aufgabe zugrunde, ein Verfahren zum Erzeugen eines digitalen Ist-Geschwindigkeitssignales in einem Positioniersystem für die Schreib-/Leseköpfe eines Magnetplattenspeichers, bei dem aus Servoinformationen sogenannte Positionssignale für die Feinregelung gewonnen werden, zu schaffen. Erfindungsgemäß wird diese Aufgabe dadurch gelöst, daß aus dem Positionssignal digitale Signale abgeleitet werden, deren Flanken die Datenspurmitten markieren, daß aus diesen Signalen Rücksetzsignale für einen durch Taktimpulse hochgezählten Digitalzähler gebildet werden und daß beim Erkennen eines Nulldurchganges des Positionssignals der Inhalt des Zählers abgefragt und der Zähler zurückgesetzt wird. Das erfindungsgemäße Verfahren hat den Vorteil, daß damit Einrichtungen zum Regeln der Geschwindigkeit eines Positionierers für die Schreib-/Leseköpfe eines Magnetplattenspeichers geschaffen werden können, die vollständig digital arbeiten. Das heißt, nicht nur die Erzeugung von Signalen für die Soll-Geschwindigkeit, insbesondere die Bremskurve des Positioniersystems, sondern auch die Messungen der Ist-Geschwindigkeit und die Erzeugung entsprechender Ist-Geschwindigkeitssignale wird digital durchgeführt.

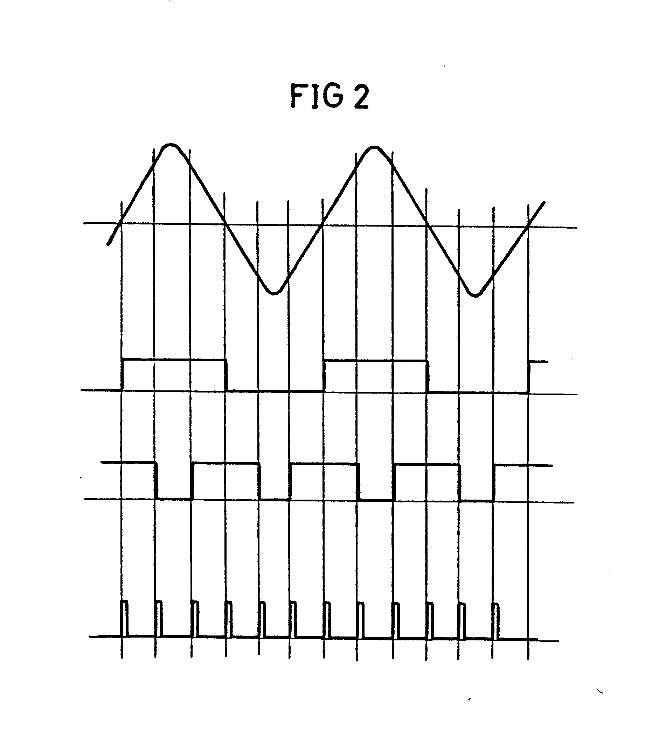

Weitere Einzelheiten der Erfindung ergeben sich aus der Beschreibung eines vorteilhaften Ausführungsbeispieles, welches anhand der Figuren 1 und 2 näher erläutert wird.

Die in Figur 1 dargestellte Anordnung besteht wie bekannte Positioniersysteme für Magnetplattenspeicher aus einem Feinregelkreis und einem Grobregelkreis, die in an sich bekannter Weise einen Positionierer 1 über einen Summierverstärker 2 und einen Leistungsverstärker 3 ansteuern. Mit Hilfe eines Servokopfes 4, der z.B. über einer separaten Servoplatte angeordnet ist, und eines Servovorverstärkers 5 sowie einer an sich bekannten Einrichtung 6, werden zum einen Positionssignale erzeugt, die über einen Kompensator 7 und einen Schalter 8 dem einen Eingang des Summierverstärkers 2 zugeführt werden. Der Schalter 8 des Feinregelkreises kann mit Hilfe eines Signales auf der Leitung 9 geschlossen bzw. geöffnet werden und zwar in Übereinstimmung mit einem Signal auf der Leitung 11, das mit Hilfe zweier UND-Gatter 10 den Grobregelkreis des Positioniersystems anschaltet oder abtrennt. Die Einrichtung 6 liefert außerdem in bekannter Weise sogenannte Zylinderimpulse an ein ODER-Gatter 18.

Der Grobregelkreis enthält wie andere bekannte Positioniersysteme ein Spurdifferenzregister 12 und entsprechend einer bereits vorgeschlagenen Einrichtung einen Speicher 13 zum Speichern digitaler Werte der optimalen Bremskurve des Positioniersystems. Die von dem Speicher 13 gelieferten Signale werden in einem Vergleicher 14 mit Ist-Geschwindigkeitssignalen verglichen und je nachdem, ob die Ist-Geschwindigkeit größer oder kleiner als die Soll-Geschwindigkeit ist, ein entsprechendes digitales Signal über eine weiter unten noch näher erläuterte Gatterschaltung 23, 24 an den Summierverstärker 2 geliefert.

Neu ist bei der in Figur 1 dargestellten Anordnung die Art und Weise, wie die Ist-Geschwindigkeit des Positionierers 1 bestimmt und entsprechende digitale Signale erzeugt werden. Basis für die Geschwindigkeitsmessung ist das zur Zylinderzählung und zur Feinregelung verwendete Positionssignal, wie es in Figur 2, oberste Zeile, dargestellt ist. Dieses Positionssignal weist für jeden Datenzylinder einen Null-Durchgang auf und verläuft im Bereich der Zylindermitten proportional zum Weg. Aus dem von der Einrichtung 6 gelieferten Positionssignal werden nun erfindungsgemäß digitale Signale abgeleitet, deren Flanken die Datenspur-(Zylinder-)Mitten markieren. Im dargestellten Ausführungsbeispiel dient dazu ein Nulldurchgangsdetektor 16. Die daraus resultierenden Signale zeigt in Figur 2 die zweite Zeile. Ein Flankendetektor 17 mit nachgeschaltetem Monoflop bildet daraus Rücksetzsignale (Figur 2, Zeile 4) für einen Zähler 18, der durch die Taktimpulse von einem Taktgeber 19 hochgezählt wird. Die Zahl der zwischen zwei Nulldurchgängen und damit zwischen zwei Datenzylindermitten von dem Zähler 18 gezählten Taktimpulse ist somit ein Maß für die Geschwindigkeit des Positionierers 1. Sobald ein neuer Nulldurchgang des Positionssignals erkannt wird, vergleicht deshalb der Digitalkomparator 14 den Inhalt des Zählers 18 mit dem Inhalt des Speichers 13 und damit die Ist-Geschwindigkeit des Positionierers 1 mit seiner Soll-Geschwindigkeit. In dem Speicher 13, z.B. in Form eines ROMs, ist die Sollgeschwindigkeitskurve in Form digitaler Zählerstände abgespeichert. Ist der Inhalt des Zählers 18 kleiner bzw. größer als der entsprechende Wert des Speichers 13, dann bedeutet dies, daß der Positionierer zu schnell bzw. zu langsam gegenüber der gewünschten Geschwindigkeit ist. Diese Aussage, in Form eines digitalen Signales am Ausgang des Digitalkomparators 14, wird von einem aus den beiden Gattern 20 bestehenden Latch am Ausgang des Komparators 14 bis zum nächsten Vergleichszeitpunkt, d.h. bis zum nächsten Auftreten eines Nulldurchgangssignals festgehalten.

In leistungsfähigen Plattenspeichergeräten hat die Geschwindigkeitsregelung für das Positioniersystem einen Bereich von ca. 0,04 m/s bis 1,5 m/s zu beherrschen. Setzt man für die Maximalgeschwindigkeit z.B. 40 Takte pro Spurteilung voraus, dann ergeben sich für die Minimalgeschwindigkeit 1500 Takte. Der Zähler 18 und der Speicher 13 müßten demnach 11 Stellen besitzen, um diesen Wert binär darstellen zu können. Um jedoch mit Zählern und Speichern geringerer Stellenzahl auskommen zu können, wird gemäß einer vorteilhaften Weiterbildung des Verfahrens gemäß der Erfindung eine variable Frequenzteilung für den Zähltakt vorgeschlagen, wobei das veränderliche Teilungsverhältnis entweder vom Inhalt des Zählers 18 selbst oder auch vom Inhalt des Zylinderdifferenzregisters 12 abgeleitet werden kann. Es ist dann z.B. möglich, mit einem 8-stelligen Zähler auszukommen. Diese Lösung ist in Figur 1 durch die beiden Verbindungsleitungen von den höchstwertigen Stellen des Zählers 18 zu dem Taktgeber 19 angedeutet.

Das Latch 20 am Ausgang des Komparators 14 steuert ein zweites Latch aus dem Gatter 21 an, welches den gesamten Positioniervorgang in einen Beschleunigungs- und einen Verzögerungsabschnitt aufteilt. Während der Beschleunigungsphase fließt wie bei anderen bekannten Systemen Dauerstrom, in-dem das Latch 21 über ein Signal auf der Leitung 22 zu Beginn eines Positioniervorganges gesetzt wird. Das Ausgangssignal des Latches 21 steuert den Positionierer 1 mit Hilfe der Gatter 23 und 24 entweder in Vorwärtsrichtung, wenn auf der Leitung 25 ein Signal erscheint oder in Rückwärtsrichtung, wenn ein Signal auf der Leitung 26 auftritt.

Die Verzögerungsphase wird durch erstmaliges Überschreiten der Soll-Geschwindigkeit erkannt. In diesem Fall wird das Latch 21 zurückgesetzt und die Ansteuerung des Positionierers erfolgt über die Gatter 15 und 27 sowie die bereits vorher beschriebene Schaltung aus den Gattern 23 und 24 in entsprechender Weise. Im Bereich der Bremskurve werden aus den von der Einrichtung 6 gelieferten Zylinderimpulsen ständig Bremsimpulse erzeugt und dazu mit Hilfe des Gatters 15 das gespeicherte Vergleichsergebnis des Digitalkomparators 14 bzw. das Ausgangssignal des Latches 20 überlagert. Das heißt, es fließt zusätzlicher Verzögerungsstrom in den Positionierer 1, solange das Latch 20 am Ausgang des Komparators 14 die Aussage gespeichert hat, daß der Inhalt des Zählers 18 kleiner ist als der Inhalt des Speichers 13.

Bei all den Vorteilen, die das erfindungsgemäße Verfahren der Geschwindigkeitsmessung besitzt, treten doch gewisse Probleme bei sehr kleinen Spurdifferenzen auf. Es liegt nämlich nur in den Spurmitten eine Information über die Geschwindigkeit des Positionierers vor und diese Information enthält nur die Durchschnittsgeschwindigkeit, die das System beim Überfahren der davorliegenden Strecke hatte. Die Durchschnittsgeschwindigkeit enthält aber umso weniger Aussagewert über die Endgeschwindigkeit, je größer die mögliche relative Geschwindigkeitsänderung im Bereich der Meßstrecke ist. Es wäre deshalb
in den Bereichen großer relativer Geschwindigkeitsänderungen, d.h. bei kleinen Zylinderdifferenzen, wünschenswert, die Meßstrecken zu verkürzen. Dies wird gemäß einer anderen Weiterbildung des erfindungsgemäßen Verfahrens dadurch erreicht, daß aus den Positionssignalen zusätzliche digitale Signale abgeleitet werden, deren Flanken jeweils ein Drittel eines Spurabstandes links und
rechts der Spurmitte markieren. Es wird dabei davon ausgegangen, daß das Positionsfehlersignal im Bereich der
Zylindermitten einen wegproportionalen Verlauf über
ca. 2/3 der Spurteilung hat, wie aus Figur 2, 1. Zeile,
zu ersehen ist. Zur Ableitung dieser zusätzlichen digitalen Signale dient in der in Figur 1 dargestellten Anordnung ein Komparator 28, der am Ausgang der Einrichtung 6 angeordnet ist. Der Flankendetektor 17 kann sowohl aus den ersten, die Spurmitten markierenden Signalen, als auch aus den zusätzlichen, jeweils 1/3 der Spurteilung links und rechts der Spurmitte markierenden Signalen Rücksetzsignale für den Zähler 18 ableiten, wenn
die Ausgänge der beiden Einrichtungen 16 und 28 wie im
dargestellten Beispiel mit Hilfe eines Gatters 29 zusammengeführt werden. Das Gatter 30 dient dazu, die von der
Einrichtung 28 gelieferten Impulse nur im Bereich sehr
kleiner Zylinderdifferenzen wirksam werden zu lassen.
Das Gatter 31 am Ausgang des Flankendetektors 17 dient
dazu, den Zähler 18 und den Taktgeber 19 bzw. einen in
diesem enthaltenen Frequenzteiler jedesmal beim Erreichen der Zielspur zurückzusetzen, um für einen nachfolgenden Positioniervorgang einen definierten Ausgangszustand dieser beiden Einrichtungen herbeizuführen.

In Figur 1 wurde das erfindungsgemäße Verfahren anhand
einer Einrichtung erläutert, die in Form einzelner digi-

0007449

taler Baugruppen aufgebaut ist. Dies diente im wesentlichen der Erläuterung der Signalverknüpfungen. Es ist aber selbstverständlich auch möglich, das erfindungsgemäße Verfahren mit Hilfe programmierter Logik (Mikroprozessoren) zu realisieren.

Patentansprüche

1. Verfahren zum Erzeugen von digitalen Ist-Geschwindigkeitssignalen in einem Positioniersystem für die Schreib-/Leseköpfe eines Magnetplattenspeichers, bei dem aus Servoinformationen ein sogenanntes Positionssignal für die Feinregelung gewonnen wird, d a d u r c h g e k e n n z e i c h n e t , daß aus dem Positionssignal (erste) digitale Signale abgeleitet werden, deren Flanken die Datenspurmitten (Zylindermitten) markieren, daß aus diesen Signalen Rücksetzsignale für einen durch Taktimpulse hochgezählten Digitalzähler gebildet werden, und daß beim Erkennen eines Nulldurchganges des Positionssignales der Inhalt des Zählers abgefragt und der Zähler zurückgesetzt wird.

2. Verfahren nach Anspruch 1, d a d u r c h g e k e n n z e i c h n e t , daß aus dem Positionssignal zusätzliche (zweite) digitale Signale abgeleitet werden, deren Flanken jeweils 1/3 eines Spurabstandes links und rechts der Spurmitte markieren.

3. Verfahren nach Anspruch 2, d a d u r c h g e k e n n z e i c h n e t , daß sowohl aus den ersten als auch aus den zweiten digitalen Signalen Rücksetzsignale für den Zähler abgeleitet werden.

4. Verfahren nach Anspruch 1, d a d u r c h g e k e n n z e i c h n e t , daß die ersten digitalen Signale mit Hilfe eines Nulldurchgangsdetektors aus dem Positionssignal abgeleitet werden.

5. Verfahren nach Anspruch 1 oder 3, d a d u r c h g e k e n n z e i c h n e t , daß die Rücksetzsignale für den Zähler mit Hilfe eines Flankendetektors aus den ersten bzw. zweiten digitalen Signalen gebildet werden.

6. Verfahren nach Anspruch 1, d a d u r c h   g e -
k e n n z e i c h n e t , daß das Ergebnis des Vergleiches von Soll- und Ist-Geschwindigkeitssignalen bis zum
nächsten Vergleichszeitpunkt gespeichert wird.

7. Verfahren nach Anspruch 1, d a d u r c h   g e -
k e n n z e i c h n e t , daß die Soll-Geschwindigkeitssignale in einem ROM gespeichert werden.

8. Verfahren nach Anspruch 1, d a d u r c h   g e -
k e n n z e i c h n e t , daß die Geschwindigkeitssignale in einem RAM gespeichert werden.

9. Verfahren nach Anspruch 1, d a d u r c h   g e -
k e n n z e i c h n e t , daß der jeweilige Zählerstand
mit Hilfe eines Digitalkomparators mit den digitalen
Soll-Geschwindigkeitssignalen verglichen wird.

10. Verfahren nach einem der Ansprüche 1 bis 9, d a -
d u r c h   g e k e n n z e i c h n e t , daß die Frequenz der Taktimpulse für den Zähler verändert werden
kann.

11. Verfahren nach Anspruch 10, d a d u r c h   g e -
k e n n z e i c h n e t , daß die Frequenz abhängig vom
Inhalt des Zählers verändert wird.

12. Verfahren nach Anspruch 10, d a d u r c h   g e -
k e n n z e i c h n e t , daß die Frequenz abhängig vom
Inhalt des Spurdifferenzregisters verändert wird.

FIG 1

FIG 2

## EUROPÄISCHER RECHERCHENBERICHT

**Europäisches Patentamt**

Nummer der Anmeldung

EP 79 10 2141

### EINSCHLÄGIGE DOKUMENTE

| Kategorie | Kennzeichnung des Dokuments mit Angabe, soweit erforderlich, der maßgeblichen Teile | betrifft Anspruch |
|-----------|-----------------------------------------------------------------------------------|-------------------|
| P | PATENT ABSTRACTS OF JAPAN, vol. 2, no. 111, 14.September 1978, Seite 3.482 M 78 <br><br> & JP - A - 53 79185 (NIPPON DENKI), 13.Juli 1978. | 1,4,5 |
|  | IBM TECHNICAL DISCLOSURE BULLETIN, vol. 19, Nr. 7, Dezember 1976, New York <br> BROWNBACK und SHEEHAN: "Measuring and adjusting speed of magnetic disk access arm", Seiten 2686-2687. <br><br> * Figuren 1-3; Seiten 2686-2687 * | 1,6,7 |
|  | PATENT ABSTRACTS of JAPAN, vol. 1, Nr. 162, 21.Dezember 1977, Seite 8959 E 77 <br><br> & JP - A - 52 106 708 (TOKYO SHIBAURA) | 1,4,5 |
|  | IBM TECHNICAL DISCLOSURE BULLETIN, vol. 16, Nr.12, Mai 1974, New York <br> COMMANDER und MARTIN: "Disk file track access control". Seiten 4064-4065. <br><br> * Figuren 1-2; Seiten 4064-4065 * | 1,6,7 |
|  | US - A - 3 568 059 (INFORMATION STORAGE SYSTEMS) <br><br> * Figuren 5-6; von Spalte 4, Zeile 13 bis Spalte 5, Zeile 35 * <br><br> ./. | 1,4,6 |

**KLASSIFIKATION DER ANMELDUNG (Int.Cl. 3)**

G 11 B 5/55
G 01 P 3/54

**RECHERCHIERTE SACHGEBIETE (Int. Cl. 3)**

G 11 B 5/55
　　　　 5/58
G 01 P 3/54
　　　　 3/42
G 05 B 19/38
G 05 D 3/00
G 05 B 19/22
　　　　 13/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---------------|----------------------------|--------|
| Den Haag | 05-11-1979 | CARTRIJSSE |

EPA form 1503.1　06.78

Europäisches Patentamt

Nummer der Anmeldung

EP 79 10 2141
-2-

**EUROPÄISCHER RECHERCHENBERICHT**

| EINSCHLÄGIGE DOKUMENTE | | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| | AUTOMATIK, vol. 8, Nr. 7, Juli 1963, Bad Worishofen SATTELBERG: "Der Einsatz der Zähl-geräte im Betrieb", Seiten 266-270. <br><br> * Figur 33; Seite 268, von linke Spalte, Zeile 23 bis rechte Spalte, Zeile 23 * <br><br> -- | 1,4,5 | |
| A | US - A - 3 860 861 (POTTER INSTRUMENT COMPANY) <br><br> * Figuren 1-3; von Spalte 2, Zeile 7 bis Spalte 5, Zeile 32 * <br><br> -- | 1 | RECHERCHIERTE SACHGEBIETE (Int. Cl. ³) |
| A | DE - A - 2 519 196 (LICENTIA PA-TENT) | 1 | |
| A | US - A - 4 006 394 (INFORMATION STORAGE SYSTEMS) | 1 | |
| A | US - A - 3 811 091 (ITEL CORPO-RATION) <br><br> ---- | 1 | |